(19) Europäisches Patentamt

European Patent Office

Office européen des brevets

(11) **EP 0 934 504 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(21) Anmeldenummer: **98946286.6**

(22) Anmeldetag: **06.08.1998**

(51) Int Cl.:
**G01B 13/02** (2006.01)

(86) Internationale Anmeldenummer:
**PCT/EP1998/004915**

(87) Internationale Veröffentlichungsnummer:
**WO 1999/008069 (18.02.1999 Gazette 1999/07)**

(54) **VERFAHREN ZUR PNEUMATISCHEN LÄNGENMESSUNG**

METHOD FOR MEASURING LENGTHS PNEUMATICALLY

PROCEDE DE MESURE PNEUMATIQUE DE LONGUEUR

(84) Benannte Vertragsstaaten:
**CH DE FR GB IT LI**

(30) Priorität: **06.08.1997 DE 19733984**

(43) Veröffentlichungstag der Anmeldung:
**11.08.1999 Patentblatt 1999/32**

(73) Patentinhaber: **STOTZ FEINMESSTECHNIK GmbH**
**D-70839 Gerlingen (DE)**

(72) Erfinder: **STAMENKOVIC, Milan**
**D-70839 Gerlingen (DE)**

(74) Vertreter: **Manitz, Finsterwald & Partner GbR**
**Martin-Greif-Strasse 1**
**80336 München (DE)**

(56) Entgegenhaltungen:
**EP-A- 0 671 599        DE-A- 2 921 989**
**DE-A- 4 200 401**

**Beschreibung**

Die vorliegende Erfindung betrifft ein Verfahren zur pneumatischen Längenmessung, bei welchem das zum Messen verwendete Medium durch eine Vordüse und eine Messdüse auf eine Prallplatte geleitet und aus der Änderung des Druckes $p_2$ zwischen der Vordüse und der Messdüse der Abstand der Prallplatte von der Messdüse bestimmt wird, wobei zusätzlich der Druck $p_1$ vor der Vordüse gemessen wird und der sich aus der Druckmessung zwischen Vordüse und Messdüse ergebende Längenwert in Abhängigkeit vom Druck $p_1$ korrigiert wird.

Verfahren zur pneumatischen Längenmessung sind seit langem bekannt und werden insbesondere in der Fertigung von Werkstücken wegen der hohen Meßgenauigkeit, der schnellen Messwerterfassung und der Unempfindlichkeit des Meßverfahrens gegenüber äußeren Einflüssen eingesetzt.

Ein Nachteil bekannter Verfahren besteht darin, daß der Versorgungsdruck des Meßgerätes konstant sein muß, um eine ausreichende Meßgenauigkeit gewährleisten zu können. Es sind daher auch sogenannte Brückenschaltungen bekannt, bei welchen der Druck zwischen einem Meßzweig und einem Referenzzweig gemessen wird. Da sich Druckluftschwankungen des Versorgungsdruckes gleichermaßen auf den Referenzzweig wie auf den Meßzweig auswirken, werden diese Schwankungen ausgeglichen. Der Nachteil der Brückenschaltung besteht jedoch darin, daß durch den Referenzzweig die doppelte Druckluftmenge verbraucht wird. Außerdem erhöhen sich durch den Referenzzweig die Fertigungskosten und der Justieraufwand.

Ein Verfahren der eingangs genannten Art ist aus der DE 29 21 989 A bekannt. Bei diesem Verfahren werden die Schwankungen des Versorgungsluftdruckes durch Bildung des Quotienten von Ausgangsdruck und Versorgungsdruck kompensiert. Hierfür ist eine spezielle Ejektordüse erforderlich. Weitere Verfahren mit einer Kompensation der Versorgungsluftdruckschwankungen sind aus der DE 42 00 401 A und der EP-A-0 671 599 bekannt.

Der Erfindung liegt die Aufgabe zugrunde, ein pneumatisches Längenmessverfahren der eingangs genannten Art anzugeben, welches eine hohe Meßgenauigkeit trotz Schwankungen des Versorgungsdruckes bei gleichzeitig geringem Druckluftverbrauch und geringen Fertigungskosten ermöglicht, ohne dass eine spezielle Düse erforderlich ist. Diese Aufgabe wird dadurch gelöst, dass anstelle des Druckes $p_2$ folgende Funktion zur Berechnung der Länge verwendet wird:

$$f\,(p_1,\ p_2) = \alpha\,p_1 - p_2$$

wobei $\alpha$ eine grundsätzlich frei wählbare Konstante ist, die nicht Null ist. Das erfindungsgemäße Verfahren ist in Anspruch 1 definiert.

Erfindungsgemäß wird also anstelle einer Brückenschaltung eine Korrektur des zwischen Vor- und Meßdüse des Meßzweiges gemessenen Druckes bzw. des daraus ermittelten Längenwertes vorgenommen. Die Korrektur erfolgt dabei in Abhängigkeit des zusätzlich gemessenen Druckes $p_1$ vor der Vordüse. Dieser zusätzlich gemessene Druck $p_1$ ist ein Maß für die Schwankungen des Versorgungsluftdruckes und kann daher zur Korrektur verwendet werden. Allerdings kann der korrekte Längenwert aus dem zusätzlich gemessenen Druck $p_1$ nicht genau errechnet werden. Eine Näherungsfunktion als Korrektur reicht aber aus, um die Meßgenauigkeit in der gewünschten Weise zu erhöhen.

Durch die erfindungsgemäße Näherungsfunktion wird eine deutliche Verbesserung der Meßwerte erreicht.

Bevorzugt ist es, wenn ein geeigneter Wert für $\alpha$ durch Messung der Drücke $p_1$ und $p_2$ bei jeweils zwei verschiedenen Versorgungsluftdrücken A und B und Berechnung von $\alpha$ nach der Formel:

$$\alpha = \frac{P_{2B} - P_{2A}}{P_{1B} - P_{1A}}$$

mit

| | |
|---|---|
| $P_{1A}$ ... $p_1$ | beim Versorgungsluftdruck A |
| $P_{1B}$ ... $p_1$ | beim Versorgungsluftdruck B |
| $P_{2A}$ ... $p_2$ | beim Versorgungsluftdruck A |
| $P_{2B}$ ... $p_2$ | beim Versorgungsluftdruck B |

bestimmt wird. Es hat sich gezeigt, daß hiermit eine hohe Meßgenauigkeit erzielbar ist.

Nach einer weiteren Ausgestaltung der Erfindung werden die beiden Versorgungsluftdrücke A und B zur Be-

stimmung von $\alpha$ symmetrisch zu einem gewünschten Luftdruck, insbesondere dem Soll-Luftdruck, gewählt und die Messung beim Sollabstand $X_o$ der Meßdüse ausgeführt. Durch diese Ausgestaltung wird gewährleistet, daß im Bereich des Soll-Luftdruckes und des Sollabstandes die höchste Meßgenauigkeit erreicht wird. Eine Änderung des Sollabstandes kann dabei einfach über eine Änderung von $\alpha$ realisiert werden. Das heißt, über $\alpha$ kann eine Nullpunktsverschiebung zur Justierung der Meßvorrichtung ohne mechanische Änderungen an der Meßvorrichtung ausgeführt werden.

Nach einer weiteren Ausgestaltung der Erfindung wird die Korrektur gemäß der Formel

$$x_e = x - \gamma \Delta p \Delta x$$

durchgeführt, wobei $\Delta p = p_1 - P_0$ und $\Delta x = x - X_0$, mit

$x_e$    korrigierter Längenwert
$x$    aus $p_2$ errechneter Längenwert
$\gamma$    grundsätzlich beliebig wählbare Konstante.

Durch diese Ausgestaltung kann eine noch höhere Genauigkeit der Meßwerte, insbesondere bei größeren Druckluftschwankungen und größeren Abweichungen des Abstandes vom Sollwert erreicht werden.

Nach einer weiteren Ausgestaltung der Erfindung wird ein geeigneter Wert für $\gamma$ durch Ermittlung des angezeigten Längenwerts bei jeweils zwei verschiedenen durch anderweitige Messung eingestellten Abständen und zwei verschiedenen Drücken $p_1$ und Berechnung von $\gamma$ nach der Formel

$$\gamma = \frac{X_{2Ph} - X_{2P0}}{(P_h - P_0)(X_{2Ph} - X_{0P0})}$$

bestimmt, mit

$X_{2Ph}$    angezeigter Längenwert beim Abstand $X_2$ und Druck $P_h$
$X_{2P0}$    angezeigter Längenwert beim Abstand $X_2$ und Druck $P_0$
$X_0 P_0$    angezeigter Längenwert beim Abstand $X_0$ und Druck $P_0$.

Es hat sich gezeigt, daß mit diesem $\gamma$-Wert besonders genaue Meßwerte erreichbar sind.

Nach einer weiteren Ausgestaltung der Erfindung werden $X_0$ als der Sollabstand und $P_0$ als der Solldruck gewählt. Durch diese Ausgestaltung wird vorteilhafterweise die höchste Genauigkeit beim Sollabstand und Solldruck erreicht.

Nach einer weiteren Ausgestaltung der Erfindung können $p_1$ und $p_2$ kalibrierte Werte der Drucksensoren vor der Vordüse und zwischen Vor- und Meßdüse sein. Nach einer anderen Ausgestaltung können $p_1$ und $p_2$ unkalibrierte Werte dieser Drucksensoren sein, insbesondere deren Spannungswerte v und u.

Bei Verwendung unkalibrierter Druckwerte erfolgt die Berechnung des korrigierten Längenwertes nach einer weiteren Ausgestaltung der Erfindung bevorzugt nach der Formel

$$x_e = X_1 + (f_e(v, u) - F_1) \frac{X_2 - X_1}{F_2 - F_1},$$

wobei
$f_e(v, u) = f(v, u) - \gamma \Delta v \Delta f(v, u)$
$\Delta v = v - V_o$
$\Delta f(v, u) = v \alpha - u - F_0$
$F_1 = f_e(v, u)$ beim Abstand $x = X_1$ und
$F_2 = f_e(v, u)$ beim Abstand $x = X_2$
mit

$x_e$   korrigierter Längenwert

v   unkalibrierter Wert des Drucksensors vor der Vordüse

u   unkalibrierter Wert des Drucksensors zwischen Vor- und Meßdüse.

Mit dieser Formel kann ein sehr genauer Meßwert berechnet werden, ohne daß kalibrierte Drucksensoren erforderlich wären. Es können daher kostensparende, unkalibrierte Drucksensoren für die Meßvorrichtung verwendet werden.

Ausführungsbeispiele der Erfindung sind in der Zeichnung dargestellt und werden nachfolgend beschrieben. Es zeigen, jeweils in schematischer Darstellung,

Fig. 1   eine Meßanordnung zur Durchführung des erfindungsgemäßen Verfahrens,

Fig. 2   ein herkömmliches Netzwerk ohne Brücke,

Fig. 3a   den Aufbau eines herkömmlichen pneumatischen Längenmeßsystems, welches mit einem stabilen Versorgungsluftdruck gespeist werden muß,

Fig. 3b   die normierte Kennlinie $p_2/p_1$,

Fig. 4   die Druckteilerschaltung zu Fig. 3,

Fig. 5   die Abhängigkeit des Meßdruckes $p_2$ von dem Spalt x, wobei der quasi-lineare Meßbereich um den Wendepunkt $X_0$ ausgenutzt wird,

Fig. 6   ein klassisches Druckmeßverfahren mit pneumatischer Meßbrücke,

Fig. 7   eine Ersatzschaltung zur Darstellung, daß um den Nullpunkt $X_0$ die Netzwerkbrückenschaltung unabhängig von der Druckluftversorgung $p_1$ ist,

Fig. 8   die Kennlinien des Meßwandlers von Fig. 2, die stark vom Versorgungsluftdruck beeinflußt sind,

Fig. 9   die Kompensation des Meßwertes über einen zusätzlichen Drucksensor,

Fig. 10   die Druckgeraden $p_1$ und $p_2$ in bezug zu der Referenzdruckabszisse,

Fig. 11   die Druckgeraden $p_1$ und $p_2$ in bezug zum Versorgungsluftdruck $p_1$,

Fig. 12   eine Darstellung der Daten der Tabelle 4, wonach nur der gemessene Abstand x gleich $X_0$ von dem Versorgungsluftdruck $p_1$ unabhängig ist,

Fig. 13   den Anzeigefehler, der sich mit der Entfernung zum Abstand x gleich $X_0$ vergrößert,

Fig. 14   den angezeigten Abstand in Abhängigkeit vom Luftdruck,

Fig. 15   die Abweichungen vom Sollwert, wobei nach dem Einsatz der Gleichung 22 bis zu zehnfache Erhöhung der Meßwertstabilität gewonnen wurde,

Fig. 16   die Transformation f(v,u), deren Rohwert nur um den Punkt x gleich $X_0$ vom Versorgungsluftdruck unabhängig ist,

Fig. 17   die Differenzen f(v, u) - f(Vo, u), die zu den Abweichungen des Versorgungsluftdruckes $p_1$ zu dem Referenzdruck $p_1$ gleich $P_1$ und der Entfernung zum Referenzpunkt x gleich $X_0$ proportional sind,

Fig. 18   die Transformation $f_e(v, u)$ und

Fig. 19   die Differenz $f_e(v, u) - f(Vo, u)$, wonach die erzielte Empfindlichkeit gegen Druckluftschwankungen von $p_1$ um den Faktor 10 verringert ist.

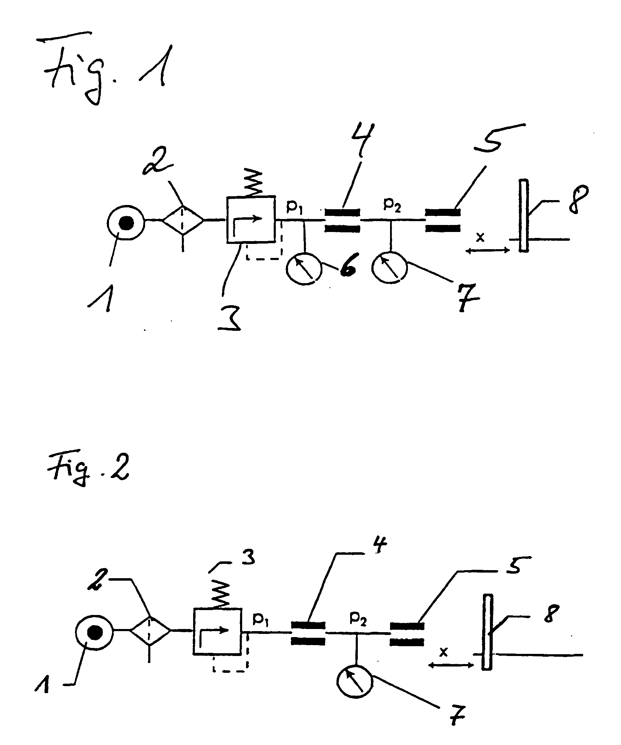

Die in Fig. 1 gezeigte Meßanordnung urnfaßt eine Druckquelle 1, ein Filter 2, einen Druckregler 3, eine Vordüse 4, eine Meßdüse 5, einen vor der Vordüse 4 angeordneten ersten Drucksensor 6 und einen zwischen Vordüse 4 und Meßdüse 5 angeordneten zweiten Drucksensor 7. Vor der Luftaustrittsöffnung der Meßdüse 5 ist eine Prallplatte 8 stellvertretend für ein zu messendes Werkstück gezeigt.

Nachfolgend werden die Verhältnisse bei herkömmlichen Druckmeßverfahren und beim erfindungsgemäßen Druckmeßverfahren nochmals ausführlich dargestellt, wobei zur Erläuterung der Erfindung spezielle Ausführungsbeispiele verwendet werden.

1. Einführung

In der 70-jährigen Entwicklungsgeschichte des Luftdruckmeßverfahrens entstanden mehrere Varianten, von denen die wichtigsten heute in der DIN 2271[1] zusammengefaßt sind. Die wesentlichen Vorteile der pneumatischen Längenmeßtechnik sind: einfache mechanische Ausführung, keine beweglichen Teile (Meßtaster/-hebel), Selbsteinigung der Meßstelle, berührungslose Abtastung, kleine Abmessungen des Meßmittels (Meßdüsen), hohe Genauigkeit mit der Auflösung über 0,1 $\mu$m [3, 4, 8].

Aufgrund der aufgeführten Vorteile fand in den vergangenen Jahren eine weite Verbreitung des pneumatischen Meßprinzips statt. Besonders in der Fertigung wird die hohe Meßgenauigkeit, schnelle Meßwerterfassung und die Unempfindlichkeit des Meßverfahrens gegen äußere Einflüsse (Späne, Emulsionen, Verschmutzungen) sehr geschätzt [2, 3, 5, 7].

Ein allgemeiner Nachteil der heutigen pneumatischen Messungen besteht darin, daß der Versorgungsdruck des Meßgerätes konstant sein muß. Besonders betroffen sind Ausführungen ohne pneumatische Brücke (z.B. Durchflußmeßverfahren, Geschwindigkeitsmeßverfahren und Druckmeßverfahren [1, 7, 9]). Um eine Meßgenauigkeit im $\mu$m-Bereich gewährleisten zu können, sind Druckluftschwankungen im kleinen mbar-Bereich zwischen Versorgungseinheit und Meßgerät erlaubt. Um konstante Druckluftverhältnisse innerhalb der pneumatischen Meßgeräte garantieren zu können, mußte eine Kompensationsbrücke hinzugefügt werden. Die wiederum höhere Fertigungskosten verursachte, und den Druckluftverbrauch des Meßgerätes steigerte.

In diesem Manuskript wird eine neue Ausführung des pneumatischen Hochdruckmeßverfahrens nach DIN 2271 beschrieben. Das hier dargestellte pneumatische Längenmeßverfahren erzielt auch ohne pneumatische Brücke einen, gegen die Schwankungen des Versorgungsluftdruckes stabilen Meßwert. Die pneumatische Brücke wird durch einen zusätzlichen Druckluftsensor ersetzt, mit dem die aktuelle Versorgungsdruckluft gemessen wird. Dadurch wird der aktuelle Meßwert ständig korrigiert. Die Ableitung der Kompensationsberechnung wird anhand eines Berechnungsbeispieles erläutert.

2. Theoretische Grundlagen des Druckmeßverfahrens

Pneumatische Meßgeräte werden in zwei Gruppen eingeteilt. Diese Klassifizierung richtet sich nach dem Versorgungsdruck des einzelnen Meßgerätes. Bei Niederdruckmeßgeräten beträgt der Versorgungsdruck $\leq$0,1 bar, und bei Hochdruckmeßgeräten liegt der Versorgungsdruck bei $\geq$0,5 bar. An dieser Stelle werden die Eigenschaften der pneumatischen Netzwerke für Hochdruckmeßverfahren beschrieben.

2.1 Netzwerk ohne Brücke

Der Grundaufbau eines pneumatischen Längenmeßsystems, welches nach dem Druckluftmeßverfahren arbeitet, wird in Fig. 2 dargestellt. Die Versorgungsluft wird mit einem Filter gereinigt und mit Hilfe eines Druckluftreglers konstant eingestellt. Bei einem stabilen Eingangsdruck $p_1$, beeinflußt im wesentlichen das Flächenverhältnis $A_2/A_1$ (Meßdüse/ Meßvordüse) die Luftströmung, und dadurch den Meßdruck $p_2$, welcher mit einem Manometer angezeigt wird.

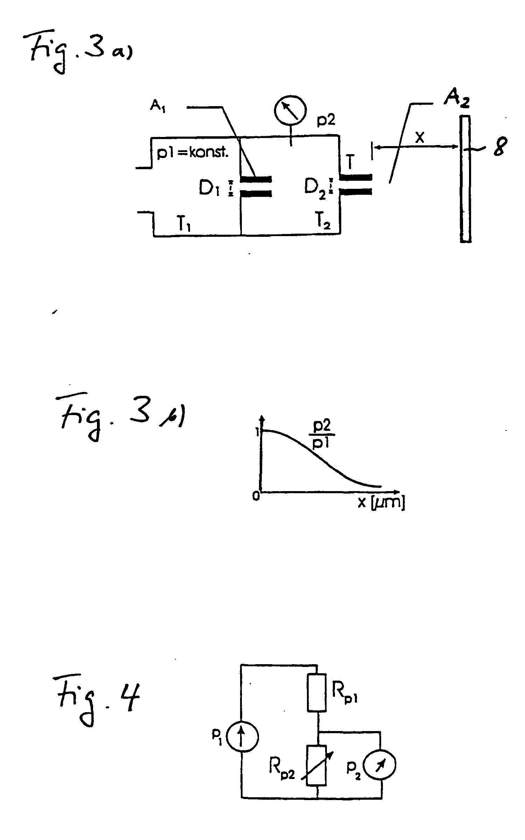

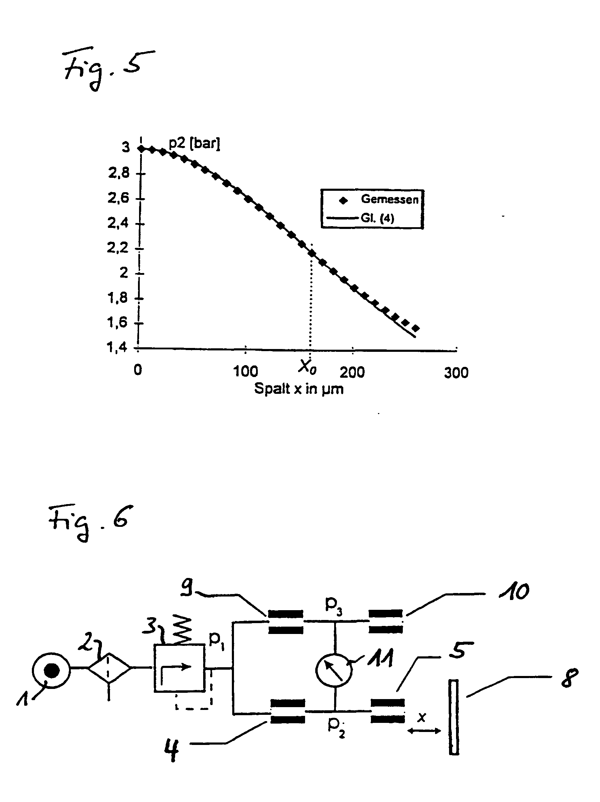

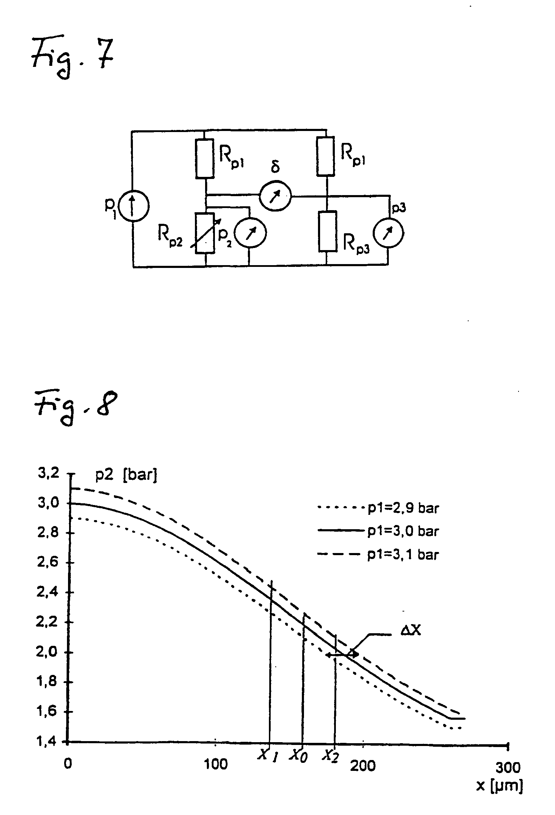

Die genaue Berechnung des Meßdruckes $p_2$ in Abhängigkeit vom Spalt x, wird durch die Kompressibilität der Luft, Reibungsverluste und Wärmeaustausch erschwert [2, 6, 9]. In erster Annäherung kann davon ausgegangen werden, daß die Strömung unter einem adiabatischen Prozeß verläuft bzw. der Wärmeaustausch vernachlässigt wird ($T_1 = T_2$ = konst; siehe Fig. 3). Die Flächen bzw. Querschnitte werden nach den folgenden Formeln berechnet:

$$A_1 = D_1^2 \, \pi/4; \qquad A_2 = \pi D_2 x \qquad \qquad ...(1)$$

wobei $D_1$ und $D_2$ engsten Durchmesser von der Vor- und Meßdüse sind. Der theoretische Meßbereich wird mit dem Durchmesser der Meßdüse begrenzt, d.h. $x_{max} = D_2/4$.

Die Geometrie der Vor- und Meßdüsen, zusammen mit den ausgewählten Speise-$p_1$ und Meßdruck $p_2$ spielen

eine entscheidende Rolle für die Ausflußzahlgröße und Energieverluste. Deswegen sind die Düsen am Eingang häufig gerundet [7, 9] bzw. der Strömungskanal der Vormeßdüse hat fast die Form einer Laval-Düse [9]. Die normierte Kennlinie in bezug zu dem Versorgungsdruck wird in Fig. 3b dargestellt. Wird die Meßdüse mit einer Prallplatte zugedrückt ($x$ = 0), ist der Meßdruck $p_2$ gleich wie $p_1$.

Eine Vergrößerung des Spaltes über einen Viertel des Meßdüsendurchmessers bringt praktisch keine Änderung des Meßdruckes $p_2$ (normalerweise endet die Meßdüse mit dem engsten Querschnitt).

Unter der Voraussetzung, daß die Querschnitte der Zuführungsleitungen für die Vor- und Meßdüsen ausreichend groß sind und daß T1 = T2 gleich ist, strömt im stationären Zustand die gleiche Luftmenge durch die Vor- und Meßdüse. Somit kann folgende Gleichung aufgestellt werden [9]:

$$\frac{x}{x_{max}} \frac{A_{2\,max}}{A_{1\,min}} = \frac{\alpha_1}{\alpha_2} \frac{p_1}{p_2} \frac{\sqrt{\left(\frac{P_{1\,min}}{P_1}\right)^{\frac{2}{\kappa}} - \left(\frac{P_{1\,min}}{P_1}\right)^{\frac{\kappa+1}{\kappa}}}}{\sqrt{\left(\frac{P_{2\,min}}{P_2}\right)^{\frac{2}{\kappa}} - \left(\frac{P_{2\,min}}{P_2}\right)^{\frac{\kappa+1}{\kappa}}}} \qquad ...(2)$$

wobei $\kappa$ = 1,4; $A_{2max} = D_2^2 \pi/4$; $\alpha_1$ und $\alpha_2$ Ausflußzahlen von den Vor- und Meßdüsen; $A_{1min}$ der engste Vormeßdüsenquerschnitt (angenähert $A_{1min} = A_1$); $p_{1min}$ und $p_{2min}$ die Drücke in engsten Querschnitten der Vor- und Meßdüse.

Für einen Speisedruck $p_1$ zwischen 2,5 und 3,2 bar kann die Gleichung (2) vereinfacht werden:

$$x = x_{max} \frac{A_1 \alpha_1 p_1}{A_{2\,max} \alpha_2 p_2} \frac{1}{0,26} \sqrt{\left(\frac{p_2}{p_1}\right)^{\frac{2}{\kappa}} - \left(\frac{p_2}{p_1}\right)^{\frac{\kappa+1}{\kappa}}} \qquad ...(3)$$

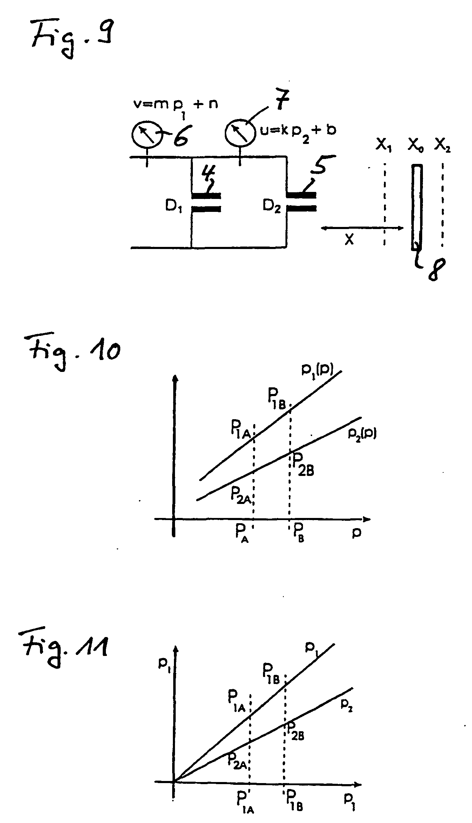

In Fig. 4 ist ein einfaches Analogmodell von einem Längenmeßdruckwandler (s. Fig. 2 und 3) dargestellt. Die Spannung wird mit dem Luftdruck und der Widerstand mit dem entsprechenden pneumatischen Widerstand $R_p = k/A^2$ ersetzt, wobei k eine Konstante ist. Daraus ergibt sich folgende Gleichung:

$$p_2 = \frac{p_1}{1 + \frac{R_{p1}}{R_{p2}}} = \frac{p_1}{1 + \frac{A_2^2}{A_1^2}} = \frac{p_1}{1 + B_x^2} \qquad ...(4)$$

wobei $B = \beta 16 \frac{D_2^2}{D_1^4}$ entspricht.

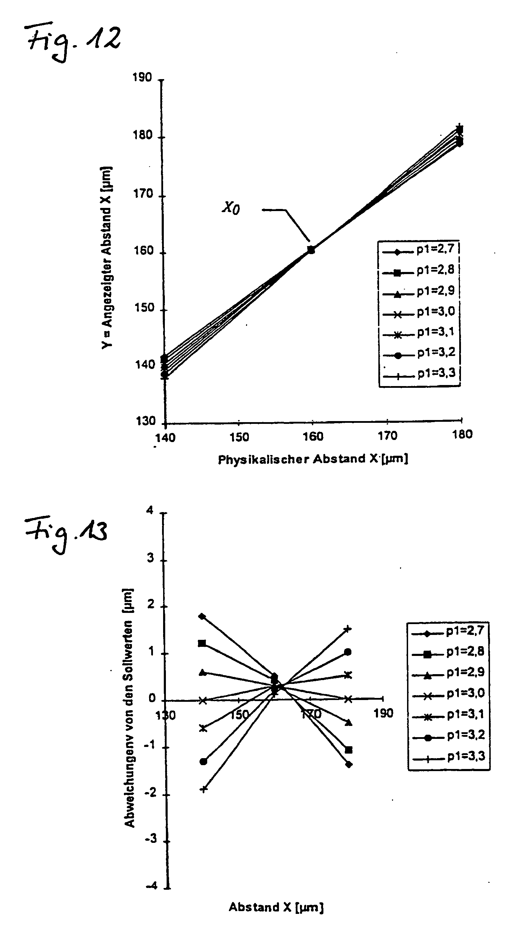

Der Faktor $\beta$ ist auch von den Ausflußzahlen $\alpha_1$ und $\alpha_2$ abhängig [2, 6]. In Fig. 5 werden Kurvenverläufe von der Gleichung (4) gleichzeitig mit einer aufgenommenen Kennlinie dargestellt ($D_1$ = 0,86 mm; $D_2$ = 1 mm; $\beta$ = 0,5; $p_1$ = 3,0 bar).

2.2 Netzwerk mit Brücke

Beim Differenzdruckmeßverfahren wird die Differenz $\delta$ des Meßdruckes $p_2$ zu einem Vergleichsdruck $p_3$ zur Bildung des Meßwertes benutzt (s. Fig. 6). Da der Vergleichsdruck $p_3$ mit dem Speisedruck $p_1$ im direkten Zusammenhang steht, wird die Beeinflussung der Druckschwankungen in der Versorgungsluft minimiert.

Entspricht die Referenzvordüse der Vormeßdüse und wurde die Referenzdüse so ausgewählt, daß ihr Querschnitt dem Spalt $x$ um den Wendepunkt $X_0$ entspricht (s. Fig. 5 und 6), so wird der Meßwert um den "0"-Punkt vom

Versorgungsluftdruck $p_1$ unabhängig (z.B. im Bereich von 3,0 bar $\pm$ 0,3 bar). Dies wird anhand einer Ersatzschaltung in Fig. 7 illustriert. Die angezeigte Druckdifferenz $\delta$ wird nach Gleichung (5) berechnet:

$$\delta = p_3 - p_2 = p_1\left(K_3 - \frac{1}{1 + Bx^2}\right) \qquad\qquad ...(5)$$

Die Konstante $K_3$ wird von den Querschnitten der Referenzvordüse und Referenzdüse bestimmt. Sind die Drücke $p_2$ und $p_3$ gleich, bzw. entspricht $K_3 = 1/(1 + Bx^2)$, wird der Meßwert von $p_1$ unabhängig. Um so größer die Differenz $\delta$ ist, um so mehr wird die Stabilität des Meßwertes von der Versorgungsdruckluft abhängig (s. Tabelle 4).

3. Die Kalibrierung beim Druckmeßverfahren

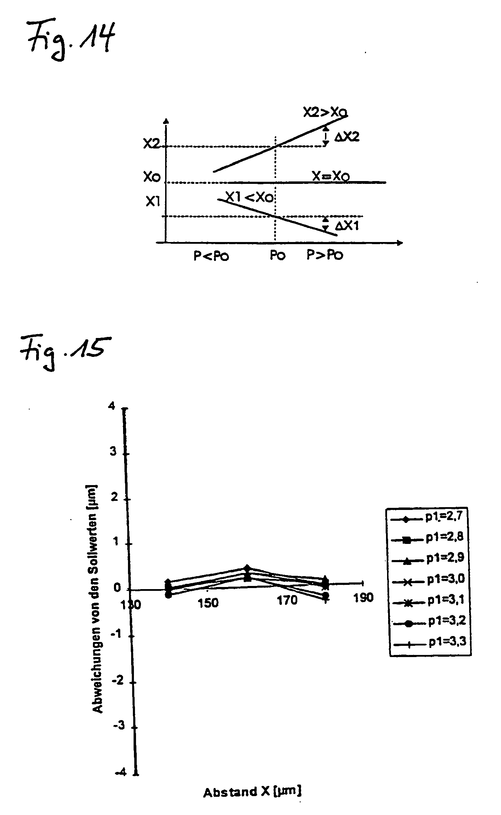

In Fig. 8 werden die ermittelten Kennlinien von einem pneumatischen Längenmeßsystem (Netzwerk ohne Brücke, s. Fig. 2 und 3) bei verschiedenen Versorgungsluftdrücken dargestellt ($p_1 = 2,9$, $p_1 = 3,0$ und $p_1 = 3,1$ bar). Die Mitte des linearen Meßbereiches (bzw. der Wendepunkt) wandert in diesem Fall um $X_0 = 160$ $\mu$m. Vorausgesetzt, daß der Druck $p_1$ mit einem konstanten Wert gehalten werden kann (z.B. $p_1 = 3,0$ bar), und daß der lineare Meßbereich für die Messung ausgewählt (z.B. in diesem Fall $\pm 20$ $\mu$m um den Wendepunkt $X_0$) wurde, kann die Gleichung (6) für die Kalibrierung angewandt werden. $X_1$ und $X_2$ sind zwei bestimmte Abstände, die mit einer Mikrometerschraube gemessen werden können (z.B. $X_1 = X_0 - 20$ $\mu$m $= 140$ $\mu$m und $X_2 = X_0 + 20$ $\mu$m $= 180$ $\mu$m). Der Wert $P_{x1}$ ist der Wert vom Meßdruck $p_2$ bei einem von Abstand $X_1$, und $P_{x2}$ ist der Wert von $p_2$ bei einem Abstand von $X_2$.

$$x = X_1 + (p_2 - P_{x1})\frac{X_2 - X_1}{P_{x2} - P_{x1}} \qquad\qquad ...(6)$$

Mit der Formel (6) kann auch die Brückenschaltung kalibriert werden. Nun wird die Variable $p_2$ durch die Variable $\delta$ entsprechend ersetzt [8].

In der Praxis werden Luftdrucksensoren eingesetzt, die am Ausgang ein unkalibriertes Ausgangssignal mit einer linearen Abhängigkeit vom gemessenen Druck (d.h. $u = k\,p_2 + b$ (Strom oder Spannung)) liefern. Die Gleichung (6) gilt auch in diesem Fall, nur werden die Unbekannten $p_2$, $P_{x1}$ und $P_{x2}$ mit dem Satz u, $U_{x1}$ und $U_{x2}$ vertauscht.

4. Verbesserte Ausführung des herkömmlichen Druckluftmeßverfahrens

Aus Fig. 8 ist ersichtlich, daß die Druckschwankungen $\Delta p_1$ über $\pm 100$ mbar eine Verfälschung des Abstandes $\Delta x = 25$ $\mu$m verursachen. Das heißt, bei einer Druckschwankung von ca. $\pm 3,3$ % der Versorgungsluft, entspricht das 30 % - 50 % des Meßbereiches. Eine Verschiebung des Wendepunktes $X_0$ um 10 - 15 $\mu$m ist deutlich zu erkennen. Die Kalibrierformel (6) ist nur für die Fälle einer stabilen und konstanten Druckluftversorgung $p_1$ anwendbar (in der Regel ist eine Stabilität des Versorgungsdruckes von $\leq 1$ % gefordert).

An dieser Stelle wird mit Hilfe eines zusätzlichen Druckmeßsensors (das ist der Sensor mit der Ausgangsgröße v, s. Fig. 9, eine Transformation des Rohmeßwertes erreicht. Somit kann die Kalibrierformel (6) weiterhin angewandt werden. Folglich wird die Stabilität einer Brückenschaltung erreicht. Für die Druckänderung der Versorgungsluft von über $\pm 100$ mbar, darf sich der Meßwert nur um $\pm 0,5$ $\mu$m innerhalb des gesamten Meßbereiches ändern.

Der direkte Lösungsweg der oben gestellten Aufgabe ist, den Meßdruck $p_2$ mit einer Transformation von $p_2$ und dem aktuellen Wert der Druckluftversorgung $p_1$ zu bilden.

Und somit kann das Resultat in die Gleichung (6) eingesetzt werden, d.h. $p_2 \rightarrow f(p_1, p_2)$. Die Kompensationsbedingung, die damit die Transformation erfüllen muß, lautet:

$$f(p_1,\ p_2) = \text{Konst.} \qquad\qquad \text{bei } x = X_0 \qquad\qquad ...(7)$$

Somit kann ein Meßwert, in Mitten des Meßbereiches, von der Versorgungsdruckluft unabhängig gebildet werden.

Tabelle 1: Änderungen der $p_1$ [bar] und $p_2$ [bar] bei den Abständen $X_1$, $X_0$ und $X_2$ (Bezug Fig. 4 und Fig. 8)

|  | $p_1$ | $p_2$ | $p_1$-$p_2$ |  | $p_1$ | $p_2$ | $p_1$-$p_2$ |  | $p_1$ | $p_2$ | $p_1$-$p_2$ |
|---|---|---|---|---|---|---|---|---|---|---|---|
| $X_1$ | 2,901 | 2,245 | 0,656 |  | 3,001 | 2,329 | 0,672 |  | 3,102 | 2,413 | 0,688 |
| $X_0$ | 2,899 | 2,102 | 0,797 |  | 3,000 | 2,182 | 0,818 |  | 3,101 | 2,263 | 0,838 |
| $X_2$ | 2,902 | 1,966 | 0,935 |  | 3,000 | 2,041 | 0,959 |  | 3,101 | 2,118 | 0,984 |

In der Tabelle 1 werden die in Fig. 8 ermittelten Ergebnisse dargestellt.

Die intuitive Art der Kompensation des Meßdruckes $p_2$ mit der Differenz zu $p_1$ bzw. die Transformation:

$$f(p_1, p_2) = p_1 - p_2 \qquad \qquad ...(8)$$

scheint nicht plausibel zu sein, da sie sich nach der Tabelle 1 bei einem festen Abstand x nicht konstant verhält (z.B. bei x = $X_0$ variiert die Druckdifferenz $p_1$-$p_2$ für $\Delta p_1$ = 202 mbar um $\Delta(p_1$-$p_2)$ = 41 mbar).

Aus der Tabelle 1 kann abgeleitet werden, daß das Druckverhältnis $p_1$ zu $p_2$ in bezug zu einem steigenden Referenzdruck p nicht gleich ist. Dies wird in der Skizze in Fig. 10 gezeigt. Eine Änderung von p in bezug zu $P_A$ bis $P_B$ wirkt sich beim $p_1$ als Änderung von $P_{1A}$ bis $P_{1B}$ aus, bzw. beim $p_2$ als Änderung von $P_{2A}$ bis $P_{2B}$.

Die Bedingung (7) und Transformation (8) kann jetzt in diesem System neu geschrieben werden:

$$p_1(p) - p_2(p) = \text{Konst.} \qquad \text{bei beliebigem p} \qquad ...(9)$$

Da man lineare Verhältnisse voraussetzen kann, können die Druckverhältnisse aus Fig. 10 weiterentwickelt werden:

$$p_1(p) - p_2(p) = k_1 p + m_1 - k_2 p - m_2 = p(k_1 - k_2) + m_1 - m_2 = \text{Konst.} \qquad ...(10)$$

wobei $k_1$ und $k_2$ die Geradenkoeffizienten beschreiben, und $m_1$ und $m_2$ die Schnittpunkte auf der Y-Achse bei X p = 0 für die Geraden $p_1(p)$ und $p_2(p)$ sind. Da $m_1$ und $m_2$ Konstanten sind, wird Gleichung (10) erfüllt, wenn $k_1 = k_2$ ist. Da aber $k_1$ eine feste Konstante ist, wird ein Korrekturwert benötigt, um die geforderte Bedingung erfüllen zu können, d.h.:

$$k_1 \alpha = k_2 \qquad \qquad ...(11)$$

Der Koeffizient $\alpha$ kann einfach berechnet werden:

$$\alpha = \frac{k_2}{k_1} = \frac{\dfrac{P_{2B} - P_{2A}}{P_B - P_A}}{\dfrac{P_{1B} - P_{1A}}{P_B - P_A}} = \frac{P_{2B} - P_{2A}}{P_{1B} - P_{1A}} \qquad ...(12)$$

Da nach (9) kein genauer, sondern nur ein konstanter Wert gefordert wird, können die Koeffizienten von (10)

$m_1$ und $m_2$ weggelassen werden bzw. die Transformation (11) erfüllt die Bedingung (9):

$$p_1(p) - p_2(p) = k_1 \alpha p - k_2 p \qquad \ldots(13)$$

Der Bezugsreferenzdruck p kann beliebig ausgewählt werden. Setzen wir $p = p_1$ ein, konkretisieren sich die Ausdrücke (12) und (13) wie in Fig. 11 zu sehen ist, bzw. die benötigte Transformation lautet:

$$f(p_1, p_2) = \alpha p_1 - p_2 \qquad \ldots(14)$$

Die Kalibrierformel (6) wird jetzt:

$$x = X_1 + (f(p_1, p_2) - F_1)\frac{X_2 - X_1}{F_2 - F_1} \qquad \ldots(15)$$

wobei der Wert $F_1$ der Transformation $f(p_1, p_2)$ beim ersten ($X_1$) und $F_2$ der Wert der Transformation $f(p_1, p_2)$ beim zweiten Einstellmeister ($X_2$) ist. Statt der genauen Luftdruckwerte $p_1$ und $p_2$, können jetzt in den Gleichungen (14) und (15) direkt unkalibrierte Sensorausgänge v und u eingesetzt werden: $f(v, u) = \alpha v - u$.

5. Beispiel und Ergebnisse

Die Kalibrierung des P/E-Wandlers nach der neuen beschriebenen Ausführung, erfolgt in zwei Schritten. Im ersten Schritt wird der Kompensationskoeffizient $\alpha$ bestimmt.

Tabelle 2: Bestimmung des $\alpha$

| p1[bar] | v[V] | u[V] |
|---------|-------|-------|
| 2,8 | 6,988 | 5,061 |
| 3,2 | 7,983 | 5,853 |

Dieser Schritt wird nur einmal durchgeführt. Zuerst wird die Prallplatte auf die "0"-Position fixiert ($X_0$). Für die Düsenkombination $D_1 = 0,86$ mm und $D_2 = 1$ mm (s. Fig. 9) wird $X_0 = 160$ $\mu$m gesetzt. Dann wird die Druckluftversorgung auf ca. 2,8 bar eingestellt und die Ausgangswerte der Sensoren (v und u) übernommen (s. Fig. 9). Das zweite Wertepaar (v, u) wird bei einem erhöhten Druck ca. 3,2 bar aufgenommen. Über die abgespeicherten Werte in der Tabelle 2 wird Konstante $\alpha$ berechnet: $\alpha = \dfrac{7,983 - 6,988}{5,853 - 5,061} = 0,79598$. Im zweiten Schritt werden die v und u Werte in den fixen

Positionen $X_1 = X_0 = 20$ $\mu$m und $X_2 = X_0 + 20$ $\mu$m übernommen, wobei der Luftdruck jetzt in der Druckluftversorgung bei ca. 3,0 bar eingestellt ist. Dadurch kann die Tabelle 3 erstellt werden.

Tabelle 3: Rohwerte bei $p_1$ ca. 3,0 bar

|  | v[V] | u[V] | f(v,u) |
|-----|-------|-------|------------|
| $X_1$ | 7,487 | 5,821 | 0,13850151 |
| $X_2$ | 7,486 | 5,103 | 0,85570553 |

Aus dieser Tabelle werden $F_1 = 0,13850151$ und $F_2 = 0,85570553$ berechnet. Die Meßformel (15) nach Einsatz der berechneten Konstanten lautet:

$$x(v, u) = v44,3934991 - u55,7721358 + 132,28 \; [\mu m] \quad ...(16)$$

In der Tabelle 4 wird das neue beschriebene Druckmeßverfahren mit der klassischen Variante (Ausführung mit Brücke) verglichen (s. Fig. 6). Die ermittelten Daten, die über die abgeleitete Transformation (14) und Meßformel (15) ermittelt wurden, stimmen überein.

Tabelle 4: Ermittelte und Sollmeßwerte bei den verschiedenen Versorgungsluftdrücken

| A: Klassisches Verfahren | | | | | B: Neues Verfahren | | |
|---|---|---|---|---|---|---|---|
| $p_1$ [bar] | Soll: $X_1$ [$\mu m$] | Soll: $X_0$ [$\mu m$] | Soll: $X_2$ [$\mu m$] | | Soll: $X_1$ [$\mu m$] | Soll: $X_0$ [$\mu m$] | Soll: $X_2$ [$\mu m$] |
| 2,7 | 141,8 | 160,5 | 178,6 | | 141,7 | 160,4 | 178,5 |
| 2,8 | 141,2 | 160,4 | 178,9 | | 141,1 | 160,2 | 179,0 |
| 2,9 | 140,6 | 160,3 | 179,5 | | 140,6 | 160,3 | 179,6 |
| 3 | 140 | 160,3 | 180 | | 140 | 160,3 | 180 |
| 3,1 | 139,4 | 160,3 | 180,5 | | 139,4 | 160,3 | 180,5 |
| 3,2 | 138,7 | 160,2 | 181 | | 138,7 | 160,2 | 180,9 |
| 3,3 | 138,1 | 160,1 | 181,5 | | 138,2 | 160,2 | 181,4 |
| A: Klassische Brückenschaltung  B: Vorgeschlagene Ausführung des Druckmeßverfahrens ohne Brücke weist die gleichen Ergebnisse auf. | | | | | | | |

6. Fazit

Die beschriebene Neugestaltung des Druckmeßverfahrens weist eine Synergie zwischen der Stabilität einer Brückenschaltung und Luftverbrauchssparsamkeit eines klassischen Meßdruckverfahrens nach DIN 2271 auf. Die Hauptmerkmale sind: geringer mechanischer Aufwand bei der Herstellung des Wandlers, halbierter Luftverbrauch während des Meßbetriebes, stabiles Meßsignal, Null-Punktverschiebung ohne eine mechanische Änderung (bzw. Bereich der Unempfindlichkeit auf Luftdruckversorgung wird mit $\alpha$ bestimmt).

7. Literatur

[1] DIN 2271 Teil 1, Teil 2, Teil 3 und Teil 4
[2] Erler, R. Über den Stand der pneumatischen Feinmeßtechnik und zu Fragen des erforderlichen Gerätesortiments, Feingerätetechnik, 12/1961, S. 563-571
[3] Falkenberg Y., Werner F.: Hochleistungsschleifschieben prozeßnah messen, Feinwerktechnik & Meßtechnik, 102 (1994), 5-6, S. 256-262.
[4] Gale, G.E. A thickness measuring device using pneumatic gauging to detect the sample, Meas. Sci. Technol. 6/1995, S. 1566-1571
[5] Lehnert E., Pneumatische In-Process-Meßtechnik, Qualitätstechnik QZ 12/1987, S. 583-586
[6] Lotze, W. Neue Methoden zur Berechnung pneumatischer Feinzeiger, Feingerätetechnik, 6/1966, 275-281
[7] Lotze/Kondaschewski: Meßsteuergeräte spanender Werkzeugmaschinen, Berlin, VEB Verlag Technik (1974)
[8] Stamenkovic, M., Genaues Kalibrieren und Messen ohne genaue Positionierung des Werkstückes, Feinwerktechnik & Meßtechnik 9/1996, S. 651-654
[9] Wiemer A.: Pneumatische Längenmessung, VEB Verlag, 1970

Abschnitt: Kompensation des Versorgungsdruckes über den ganzen Meßbereich

Variante 1: Kompensation bezogen auf Drücke $p_1$ und $p_2$

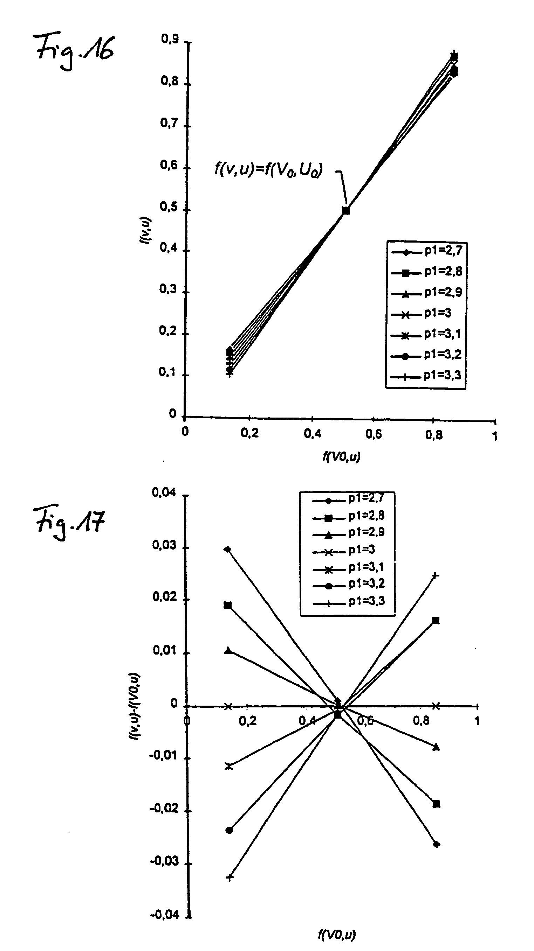

Die numerischen Daten von der Tabelle 4 sind graphisch in Fig. 7 dargestellt. Um den Punkt $X_0$ = 160 $\mu$m sind die Meßwerte (die nach der Formel 14 ermittelt wurden) von der Versorgungsdruckluft $p_1$ praktisch unabhängig (Y-Achse in Fig. 12). Für die größeren Abweichungen von $X_0$ (z.B. für mehr als $\pm$2-3 $\mu$m) wird der Anzeigefehler für die extremen Druckluftschwankungen ($\pm$0,3 bar um $P_0$ = 3,0 bar) nicht mehr vernachlässigbar. Im dargestellten Beispiel liegt die Spannweite von den angezeigten Meßwerten für $X_1$ und $X_2$ bei ca. 3 $\mu$m (s. Tabelle 4 und Fig. 12 und 13).

Nach diesen Daten wird in Fig. 13 ein allgemeines Verhalten einer pneumatischen Brücke vorgestellt. Für den Druck $p_1$ > $P_0$ = 3,0 bar und für x > $X_0$ (z.B. x = $X_2$) wird sich eine verfälschte Vergrößerung der Anzeige ergeben (s. Fig. 13). Beim gleichen Abstand (x > $X_0$) verursacht eine Verkleinerung des $p_1$ ($p_1$ < $P_0$) eine Verkleinerung der Anzeige des gemessenen Abstandes. Ist aber x kleiner als $X_0$ (z.B. wenn x = $X_1$), wird sich das Vorzeichen der Verfälschung invertieren.

In allgemeiner Form kann der abgelesene Wert y als Summe vom echten Wert $x_e$ bei Druckluft $p_1$ = $P_0$ und dem erzeugten Fehler $\varepsilon$ betrachtet werden, d.h.:

$$x = x_e + \varepsilon \qquad \qquad ...(17)$$

Wie aus den Fig. 12 und 13 ersichtlich ist, kann es genommen werden, daß der Fehler $\varepsilon$ der Abweichung $\Delta x$ = x - $X_0$ und Druckdifferenz $\Delta p$ = $p_1$ - $P_0$ direkt folgt bzw.

$$\varepsilon = \gamma\Delta p\ \Delta x = \gamma(p_1-P_0)(x-X_0) \qquad \qquad ...(18)$$

wobei $\gamma$ Konstante der Proportionalität ist. Es wird angenommen, daß beim Druck $p_1$ = $P_0$ der Fehler $\varepsilon$ gleich Null ist ($\varepsilon$ = 0) bzw. daß in diesem Fall x = $x_e$ über den ganzen Meßbereich ist. Somit ergibt sich die Gleichung für den korrigierten Meßwert:

$$x_e = x - \gamma\Delta p\ \Delta x \qquad \qquad ...(19)$$

Die Konstante $\gamma$ wird bezogen auf einen bestimmten Druck $P_0$ und auf einen bestimmten Mittelwert $X_0$ ermittelt:

$$\gamma = \frac{X_{2Ph} - X_{2Po}}{(P_h - P_0)(X_{2Ph} - X_{0Po})} \qquad \qquad ...(20)$$

wobei sind: $X_{2Ph}$ der angezeigte Meßwert beim Druck $p_1$ = $P_h$ und x = $X_2$; $X_{2P0}$ der angezeigte Meßwert beim Druck $p_1$ = $P_0$ und x = $X_2$; $X_{0P0}$ der angezeigte Meßwert im Punkt x = $X_0$ gemessen beim Druck $p_1$ = $P_0$. Für die Berechnung der Gleichungen (19) und (20) werden schon kalibrierte Werte erforderlich bzw. zuerst wird nach der Gleichung (15) der Abstandswert y = x gebildet und dann $\Delta x$ berechnet. Gleichfalls wird für die Berechnung des $\Delta p$ der kalibrierte Druck $p_1$ benötigt.

Der entwickelte Ausdruck (19) lautet jetzt:

$$x_e = x(1 + \gamma P_0 - \gamma p_1) + X_0\gamma p_1 - P_0 X_0\gamma \qquad \qquad ...(21)$$

wobei der Wert x nach der Gleichung (15) ermittelt ist. Die Gleichung (21) kann benutzt werden für die Kompensation der klassischen Netzwerkschaltung mit der pneumatischen Brücke. In der zusammengefaßten Form von (15) und (21) wird $x_e$ auf folgende Art berechnet:

$$x_e \left( X_1 + (\alpha p_1 - p_2 - F_1) \frac{X_2 - X_1}{F_2 - F_1} \right)(1 + \gamma P_0 - \gamma p_1) + X_0 \gamma p_1 - P_0 X_0 \gamma \qquad \ldots(22)$$

Als Beispiel werden die Werte aus der Tabelle 4 übernommen (diese Daten sind graphisch in Fig. 12 dargestellt), wobei die Konstante $\gamma$ ist: $\gamma = \dfrac{178,5 - 180}{(2,7 - 3)(178,5 - 160,3)} = 0,2747.$ Da die in der Tabelle 4 schon kalibrierten x-Werte zur Verfügung stehen, wird nach dem Einsatz der Werte von der Tabelle 5 in die Gleichung (15) folgender Ausdruck erzielt:

$$x_e = x (1 + \gamma P_0 - \gamma p_1) + X_0 \gamma p_1 - P_0 X_0 \gamma = x (1,82423 - 0,2747\, p_1) + 44,038 p_1 - 132,12 \qquad \ldots(23)$$

Tabelle 5: Eingesetzte Werte für die Kompensation des $p_1$

| $X_1 = 140\ \mu m$ | $X_{2P0} = 180\ \mu m$ | $P_0 = 3$ bar |
|---|---|---|
| $X_0 = 160\ \mu m$ | $X_{2Ph} = 178,5\ \mu m$ | $P_h = 2,7$ bar |
| $X_2 = 180\ \mu m$ | $X_{0Po} = 160,3\ \mu m$ | |

Der Wert x wird in $\mu m$ und der Druck $p_1$ in bar in (23) eingegeben.

Die numerischen Daten aus der Tabelle 4 (Spalte B) wurden nach der (21) behandelt und als Ergebnisse in der Tabelle 6 dargestellt.

Im Beispiel wurde Düsenkombination $D_1 = 0,86$ mm und $D_2 = 1$ mm genommen (s. Fig. 9). Mit diesem Düsensatz wird in der Praxis in einem Meßbereich $\pm 50\ \mu m$ gemessen. Der Wandler wurde in Punkten $X_1 = 140\ \mu m$ und $X_2 = 180\ \mu m$ kalibriert. Wegen dem Linearitätsfehler wird $X_0 = 160\ \mu m$ um 0,3 $\mu m$ verfälscht angezeigt. Dieser Fehler beeinflußt die Stabilitätsberechnung nicht. Deswegen bezieht sich in der Tabelle 6 die Kompensation auf den Sollwert $X_0 = 160,3\ \mu m$.

Tabelle 6: Ermittelte und Sollmeßwerte bei den verschiedenen Versorgungsluftdrücken

| A: Differenz zu Sollwerten | | | | | B: Meßwerte $x_e$ | | |
|---|---|---|---|---|---|---|---|
| $p_1$ [bar] | Soll: 0 [$\mu m$] | Soll: 0 [$\mu m$] | Soll: 0 [$\mu m$] | | Soll: $X_1$ [$\mu m$] | Soll: $X_0{}^1$ [$\mu m$] | Soll: $X_2$ [$\mu m$] |
| 2,7 | 0,17 | 0,11 | 0,00 | | 140,17 | 160,41 | 180,00 |
| 2,8 | 0,04 | -0,11 | 0,03 | | 140,04 | 160,19 | 180,03 |
| 2,9 | 0,06 | 0,0 | 0,13 | | 140,16 | 160,30 | 180,13 |
| 3 | -0,11 | 0,0 | 0,00 | | 140,00 | 160,30 | 180,00 |
| 3,1 | 0,03 | 0,0 | -0,05 | | 139,97 | 160,30 | 179,95 |
| 3,2 | -0,11 | -0,11 | -0,23 | | 139,89 | 160,21 | 179,77 |
| 3,3 | 0,02 | -0,11 | -0,34 | | 140,02 | 160,21 | 179,66 |
| A: Differenz von den Sollwerten x (bei $p_1 = P_0$) B: Ermittelte Werte nach der Gleichung (23) | | | | | | | |

Die berechneten Meßwerte $x_e$ Meßwerte weisen für die üblichen Druckluftschwankungen (über $\pm 0,1$ bar) fast keine Änderungen hin, bzw. die ermittelten Änderungen von $x_e$ liegen unter $\pm 0,1\ \mu m$ (s. Tabelle 6).

Auch bei den für die Praxis übertriebenen Druckluftschwankungen von 2,8 bar bis 3,2 bar wird das $\pm 0,1$ bar-Band fast erhalten.

Im Vergleich zu einem klassischen pneumatischen Differenzdruckmeßverfahren mit Brückenschaltung (oder im Vergleich mit in Kapiteln 4 und 5 beschriebenen verbesserten Druckmeßverfahren) zeigt die Kompensationsgleichung (22) bis zu 10-fache Erhöhung der Stabilität des Meßwertes.

Weicht der Wert x stark vom Null-Punkt $X_0$ aus, wird der relative Stabilitätsgewinn noch größer.

Variante 2: Kompensation bezogen auf Drucksensorwerte v und u

Für die Berechnung des $x_e$ nach Formel (22) werden zwei kalibrierte Drucksensoren für die genaue Messung des $p_1$ und $p_2$ benötigt. Ist ein klassischer PEW-Wandler mit Brückenschaltung auf diese Art zu kompensieren, wird nur ein Sensor nach der Gleichung (21) notwendig. In diesem Fall verdoppelt sich aber der Luftverbrauch. Da diese Förderungen den Einsatz der beschriebenen Kompensation verteuern, wird eine von $p_1$ und $p_2$ unabhängige Form der Gleichung (22) erwünscht. In diesem Kapitel wird die Ableitung einer solchen Kompensationsformel erläutert.

Wie in Fig. 9 dargestellt ist, liefern die Drucksensoren unkalibrierte Spannungen v und u. Die Spannung v weist eine lineare Abhängigkeit vom Druck $p_1$ und die Spannung u vom Druck $p_2$ bzw. es kann geschrieben werden:

$$v = mp_1 + n; \qquad u = k\,p_2 + b \qquad \ldots(24)$$

wobei m, n k und b Konstanten sind. Diese Konstanten sind von den elektronischen Verstärkern und Eigenschaften der Drucksensoren bestimmt. Wie in Kapitel 4 und 5 beschrieben wurde, kann die Transformation (14) direkt mit diesen Spannungswerten berechnet werden, d.h.

$$f(v,\,u) = \alpha v - u \qquad \ldots(25)$$

Der Koeffizient $\alpha$ wird beim Abstand $x = X_0$ wie im Kapitel 5 beschrieben wurde, berechnet:

$$\alpha = \frac{u_h - u_l}{v_h - v_l} \qquad \ldots(26)$$

wobei Indizes h und 1 den Über- und Unterdruck bezeichnen. Zum Beispiel sind $v_h$ und $u_h$ Ausgangsspannungen beim Versorgungsdruck $p_1 = P_h$; gleichweis sind $v_1$ und $u_1$ Ausgangsspannungen beim Versorgungsdruck $p_1 = P_1$. Die Drücke $P_h$ und $P_1$ müssen nicht genau festgelegt werden. Sie sollen sich aber um den Zieldruck $p_1 = P_0$ befinden (z.B. $P_h = 2,8$ bar und $P_1 = 3,2$ bar oder umgekehrt).

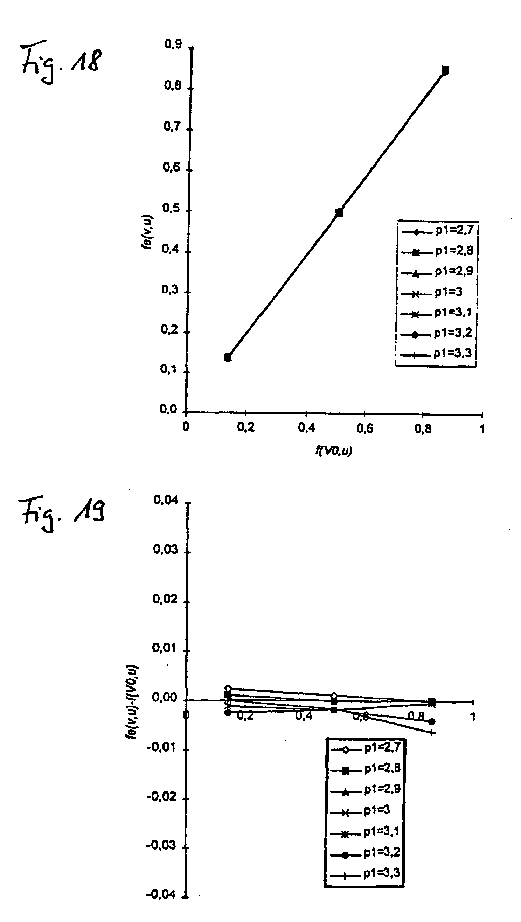

Der Ausdruck (25) gewährleistet eine Unabhängigkeit der v (bzw. Unabhängigkeit von $p_1$) nur in einem festen Punkt $x = X_0$ bzw. in Zusammenhang mit der Formel (14) verhält sich der Meßwert wie bei einer klassischen pneumatischen Brücke. Dies ist in Fig. 16 illustriert. Auf der waagerechten Achse sind die Werte von der f(v, u) bei einem konstanten Wert $v = V_0$ dargestellt bzw. die Werte von $f(V_0, u)$. Diesem Zustand entspricht $p_1 = P_0$. Aus der Fig. ist es ersichtlich, daß alle parametrierte Geraden f(v, u) sich in einem Punkt durchschneiden. Dieser Punkt ist $f(V_0, U_0)$ bzw. der Wert von f(v, u) ermittelt beim Abstand $x = X_0$ und beim Versorgungsdruck $p_1 = P_0$. In Fig. 17 ist auf der vertikalen Achse die Differenz zwischen f(f, u) und f(Vo, u) dargestellt.

Die Differenzen f(v, u) - f(Vo, u) sind proportional zu den Abweichungen des Versorgungsdruckes $p_1$ zu dem Referenzdruck $p_1 = P_0$ und der Entfernung zum Referenzpunkt $x = X_0$.

Jetzt soll Ausdruck (25) mit dem die f(v, u) definiert ist, so umgewandelt werden, daß das Ergebnis von f(v, u) bei einem beliebigen Punkt $x = X_i$, auch bei verschiedenen Werten von $p_1$, konstant bleibt. Deswegen wird eine Korrektur der f(v, u) benötigt. Da v und u lineare Funktionen von $p_1$ und $p_2$ sind, werden diese Korrekturen die Form der Gleichungen (17, 18) und (19) haben.

$$f(v,\,u) = f_e(v,\,u) + \omega \qquad \ldots(27)$$

$$\omega = \gamma \Delta v \Delta f(v,\, u) =$$

$$\gamma(v - V_0)(v\alpha - u - F_0) =$$

$$\gamma(v - V_0)(v\alpha - u - F_0) =$$

$$\gamma(v - V_0)(v\alpha - u - V_0\alpha + U_0) \qquad \ldots(28)$$

wobei $F_0 = V_0\alpha - U_0$ der Wert von der Transformation $f(v, u)$ im Punkt $x = X_0$ beim Referenzdruck $p_1 = P_0$ ist. Dem Referenzdruck $P_0$ entspricht die ausgegebene. Spannung $V_0$. Unter den gleichen Bedingungen ist der Wert $U_0$ der Spannungsbetrag vom Meßdrucksensor.

Die korrigierte Transformation (25) lautet jetzt:

$$f_e(v,\, u) = f(v,\, u) - \gamma \Delta v \Delta f(v,\, u) = v\alpha - u - \gamma(v - V_0)(v\alpha - u - V_0\alpha + U_0) \qquad \ldots(29)$$

Die Konstante $\gamma$ wird nach der folgenden Gleichung berechnet:

$$\gamma = \frac{F_{2V_h} - F_{2V_0}}{(V_h - V_0)(F_{2V_h} - F_{0V_0})} \qquad \ldots(30)$$

wobei sind: $F_{2Vh}$ der Wert von $f(v, u)$ bei $v = V_h$ und $x = X_2$; $F_{2Vo}$ der Wert von $f(v, u)$ bei $v = V_0$ und $x = X_2$; $F_{0Vo}$ der Wert von $f(v, u)$ bei $v = V_0 = x = X_0$.

In den Fig. 18 und 19 sind Ergebnisse von (28) auf der senkrechten Achse eingegeben (die numerischen Daten sind in der Tabelle 9 dargestellt). Die waagerechte Achse ist gleich wie bei den Fig. 16 und 17. Ein kurzes Vergleichen der Fig. 16 mit 18 und 17 mit 19 dokumentiert eine deutliche (ca. 10-fache) Verkleinerung der Differenzen zwischen den aktuellen Werten $f_e(v, u)$ und den Referenzwerten $f(V_0, u)$.

Da der Ausdruck (29) einen von $v$ (bzw. von $p_1$) unabhängigen Rohwert leistet, kann er direkt in die Kalibrierformel (15) eingesetzt werden:

$$x_e = X_1 + (f_e(v, u) - F_1)\frac{X_2 - X_1}{F_2 - F_1} \qquad \ldots(31)$$

wobei $F_1 = f_e(v, u)$ beim Abstand $x = X_1$ und $F_2 = f_e(v, u)$ beim Abstand $x = X_2$ sind.

Hiermit ergibt sich die Kalibriergleichung (32), die als Argumente keine kalibrierten Druckluftwerte benötigt, sondern setzt nur die Drucksensorausgangswerte $v$ und $u$ ein, d.h.:

$$x_e = X_1 + (v\alpha - u - \gamma(v - V_0)(v\alpha - u - V_0\alpha - U_0) - F_1)\frac{X_2 - X_1}{F_2 - F_1} \qquad \ldots(32)$$

Die benötigten Parameter($\alpha$, $\gamma$, $V_0$ usw....) können aus 6 bzw. 5 Kalibrierungsschritten berechnet werden. Setzt man für die Urkalibrierung $X_1 = X_0$ wird der Schritt 6 überflüssig. Dies wird insbesondere erforderlich, wenn eine Analogschaltungslösung der Gleichung (xx) stattfinden soll. Um einen genaueren Vergleich zwischen dem Kompensationsverfahren und verbesserten Druckmeßverfahren darstellen zu können, wird im beschriebenen Beispiel $X_1$ von $X_0$ separat betrachtet bzw. der Schritt 6 wird benutzt. Die benötigten Schritte sind in der Tabelle 7 dargestellt (in dieser Tabelle werden die Daten von der Tabelle 2 umgeschrieben. Hiermit wird der gleiche $\alpha$-Wert benutzt und ein direkter Vergleich der Ergebnisse erleichtert).

Tabelle 7: Durchführung der Urkalibrierung in 6 bzw. 5 Schritten

| Schritt | Sensorwert v[V] | Sensorwert u[V] | Versorgungsdruck [bar] | Abstand x[$\mu$m] | Bemerkung |
|---|---|---|---|---|---|
| 1 | $V_1 = 6{,}988$ | $U_1 = 5{,}061$ | 2,8 | $x = X_0$ | Berechnung von $\alpha$ |
| 2 | $V_2 = 7{,}983$ | $U_2 = 5{,}853$ | 3,2 | $x = X_0$ | Berechnung von $\alpha$ |
| 3 | $V_3 = 7{,}484$ | $U_3 = 5{,}454$ | 3,0 (genau!) | $x = X_0$ | |
| 4 | $V_4 = 7{,}486$ | $U_4 = 5{,}103$ | 3,0 (genau!) | $x = X_2$ | |
| 5 | $V_5 = 6{,}738$ | $U_5 = 4{,}534$ | 2,7 | $x = X_2$ | |
| 6 | $V_6 = 7{,}487$ | $U_6 = 5{,}821$ | 3 | $x = X_1$ | Fällt weg, wenn $X_1 = X_0$ |

Schritt 1: Die Prallplatte wird auf den Abstand $x = X_0 = 160$ $\mu$m zur Düse $D_2$ gebracht (s. Fig. 9). Die Versorgungsdruckluft wird auf ca. 2,8 bar gesetzt. Dieser Wert muß nicht genau eingestellt werden. Wichtig ist aber, daß der Wert um 0,1 bis 0,3 bar kleiner oder größer als "Null"-Druck $P_0 = 3{,}0$ bar ist. Die aktuellen Spannungssensorwerte $v = V_1$ und $u = U_1$ werden gespeichert.

Schritt 2: Beim unveränderten Abstand $x = X_0$ wird der Versorgungsdruck in die Gegenrichtung vom im Schritt 1 eingestellten Druck festgesetzt. In diesem Fall wurde der Wert ca. 3,2 ausgewählt. Diesem Zustand entsprechen die Werte $V_2$ und $U_2$.

Schritt 3: Beim unveränderten Abstand $x = X_0$ wird der Versorgungsdruck genau auf 3,0 bar eingestellt. In diesem Schritt wird der Referenzzustand erreicht ($x = X_0$; Druck $= P_0$) bzw. die Werte $V_0$ und $U_0$ aufgenommen.

Schritt 4: Beim unveränderten "Null"-Druck $P_0 = 3{,}0$ bar wird die Prallplatte auf den Abstand $x = X_2 = 180$ $\mu$m gebracht. Der Versorgungsdruck soll genau eingerichtet werden, solange der Wert $V_4$ mit dem $V_3 = V_0$ übereinstimmt.

Schritt 5: Beim unveränderten Abstand $x = X_2$ wird der Versorgungsdruck auf ca. 2,7 bar eingestellt. Statt 2,7 bar kann auch ein größerer Druck als $P_0 = 3{,}0$ bar ausgewählt werden, z.B. 3,2 bar.

Schritt 6: Beim Abstand $x = X_1$ wird der Versorgungsdruck auf ca. 3 bar eingestellt. (Dieser Schritt ist überflüssig, wenn $X_1 = X_0$).

Sind Kalibrierungsschritte durchgeführt, werden die benötigten Parameter nach den Ausdrücken und Reihenfolgen, die in der Tabelle 8 dargestellt sind, berechnet:

Tabelle 8: Die Parameter der Gleichung (20) werden aus den Daten von der Tabelle 8 ermittelt

| Nr. | Ausdruck |
|---|---|
| 1 | $\alpha = \dfrac{U_2 - U_1}{V_2 - V_1} = \dfrac{5{,}853 - 5{,}061}{7{,}983 - 6{,}988} = 0{,}7959799$ |
| 2 | $V_h = V_5 = 6{,}738$ |
| 3 | $V_0 = V_3 = V_4 = 7{,}484$ |
| 4 | $U_0 = U_3 = 5{,}454$ |
| 5 | $F_{2Vh} = V_5\alpha - U_5 = 0{,}92931257$ |
| 6 | $F_{2V0} = V_4\alpha - U_4 = 0{,}85570553^2$ |
| 7 | $F_{0V0} = V_3\alpha - U_3 = 0{,}50311357$ |

Tabelle fortgesetzt

| Nr. | Ausdruck |
|---|---|
| 8 | $$\gamma = \frac{F_{2V_h} - F_{2V_0}}{(V_h - V_0)(F_{2V_h} - F_{0V_0})} = 0{,}10845929$$ |
| 9 | $F_1 - V_6\alpha - U_6 - \gamma(V_6 - V_3)(Y_6\alpha - U_6 - F_{0V0}) = 0{,}13862015$ |
| 10 | $F_2 - V_4\alpha - U_4 - \gamma(V_4 - V_3)(V_4\alpha - U_4 - F_{0V0}) = 0{,}85562905$ |
| 11 | $$\frac{X_2 - X_1}{F_2 - F_1} = 55{,}7873131$$ |

In der Realität werden sich schon die Unterschiede zwischen V3 und V4 ergeben. Das ist auch der Fall im dargestellten Beispiel, wobei V3 = 7,484 [V] und V4 = 7,486 [mV]. Diese Differenz über ca. 2 mV kann vernachlässigt werden, weil die Empfindlichkeit der eingesetzten Sensoren bei ca. 2,5 V/bar liegt.

Nach dem Einsatz der berechneten Konstanten in Formel (12) kann eine konkrete Kalibrierformel geschrieben werden:

$$x_3 = 140 + 55{,}78731 (f_3(v, u) - 0{,}13862) \qquad \ldots(33)$$

wobei die Funktion $f_3(v, u)$ ist:

$$f_3(v, u) = v0{,}79598 - u - 0{,}108459(v - 7{,}484)(v0{,}79598 - u - 0{,}50311) \qquad \ldots(34)$$

Die unkompensierte Transformation $f(v, u)$ ist einfacher:

$$f(v, u) = v0{,}79598 - u \qquad \ldots(35)$$

| bar | x = X₁ = 140 μm | | | | x = X₀ = 160 μm | | | | x = X₂ = 180 μm | | | |
|---|---|---|---|---|---|---|---|---|---|---|---|---|
| $p_1$ | v | u | f(v, u) | $f_e$(v, u) | v | u | f(v, u) | $f_e$(v, u) | v | u | f(v,u) | $f_e$(v, u) |
| 2,7 | 6,739 | 5,196 | 0,16811 | 0,14104 | 6,739 | 4,86 | 0,50411 | 0,50419 | 6,738 | 4,534 | 0,82931 | 0,85571 |
| 2,8 | 6,987 | 5,404 | 0,15751 | 0,13888 | 6,988 | 5,061 | 0,50131 | 0,50121 | 6,985 | 4,723 | 0,83692 | 0,85499 |
| 2,9 | 7,239 | 5,613 | 0,14910 | 0,13969 | 7,234 | 5,255 | 0,50312 | 0,50312 | 7,24 | 4,915 | 0,84789 | 0,85702 |
| 3 | 7,487 | 5,821 | 0,13850 | 0,13862 | 7,484 | 5,454 | 0,50311 | 0,50311 | 7,486 | 5,103 | 0,85571 | 0,85563 |
| 3,1 | 7,739 | 6,033 | 0,12709 | 0,13749 | 7,738 | 5,657 | 0,50229 | 0,50232 | 7,738 | 5,294 | 0,86529 | 0,85531 |
| 3,2 | 7,985 | 6,241 | 0,11490 | 0,13599 | 7,983 | 5,853 | 0,50131 | 0,50141 | 7,986 | 5,485 | 0,87170 | 0,85163 |
| 3,3 | 8,234 | 6,448 | 0,10610 | 0,13839 | 8,237 | 6,055 | 0,50149 | 0,50162 | 8,238 | 5,677 | 0,88028 | 0,84944 |

Tabelle 9: Vermessene Drucksensorwerte für die Abstände $X_1$, $X_0$ und $X_2$ bei den Versorgungsdruckluft-schwankungen von 2,7 bis 3, bar.

In der Tabelle 9 sind die Rohsensorwerte v und u zusammen mit den berechneten Transformationen f(v, u) (nach 35) und $f_3$(v, u) (nach 34) dargestellt.

Um den Punkt x = $X_0$ sind für Druckschwankungen von $p_1$ = 2,7 bis $p_1$ = 3,3 bar praktisch keine Unterschiede zwischen f(v, u) und $f_3$(v, u) zu merken. Die Unterschiede sind ersichtlich, erst wenn der Abstand x von dem mittleren Punkt $X_0$ sich entfernt (z.B. x = $X_1$ oder x = $X_2$). In dem Fall sind die Änderungen der f(v, u) deutlich, wobei $f_e$(v, u) weiter

konstant bleibt (s. Tabelle 8).

Die relativ unübersichtliche Gleichung (30) kann nach der Konstantenberechnung in folgender allgemeiner Form geschrieben werden:

$$x_e = Av^2 + Bvu + Cv + Du + E \qquad \ldots(36)$$

wobei die Konstanten A, B, C, D und E sind:

$$A = \frac{X_1 - X_2}{F_2 - F_1}\gamma\alpha \qquad \ldots(37)$$

$$B = \frac{X_2 - X_1}{F_2 - F_1}\gamma \qquad \ldots(38)$$

$$C = \frac{X_2 - X_1}{F_2 - F_1}(\alpha + \gamma(2V_0\alpha - U0)) \qquad \ldots(39)$$

$$D = \frac{X_1 - X_2}{F_2 - F_1}(1 + \gamma V_0) \qquad \ldots(40)$$

$$E = \frac{X_2 - X_1}{F_2 - F_1}(V_0\gamma(U_0 - V_0\alpha) - F_1) + X_1 \qquad \ldots(41)$$

Somit ergeben sich die Werte: A = -4,8162, B = 6,05065, C = 83,494167, D = -101,07039 und E = 109,484 bzw. die Kalibriergleichung:

$$x_e = -4,8162v^2 + 6,05065vu + 83,49417v - 101,07039u + 109,484 \qquad \ldots(42)$$

Die Tabelle 10 stellt die kalibrierten Werte die nach dem Ausdruck (42) berechnet wurden, dar.

Tabelle 10: Ermittelte und Sollmeßwerte bei den verschiedenen Versorgungsluftdrücken

| A: Differenz zu Sollwerten | | | | B: Meßwerte | | |
|---|---|---|---|---|---|---|
| $p_1$ [bar] | Soll: 0 [$\mu$m] | Soll: 0 [$\mu$m] | Soll: 0 [$\mu$m] | | Soll: $X_1$ [$\mu$m] | Soll: $X_0$ [$\mu$m] | Soll: $X_2$ [$\mu$m] |
| 2,7 | 0,13 | 0,09 | 0,00 | | 140,13 | 160,39 | 180,00 |
| 2,8 | 0,01 | -0,07 | -0,04 | | 140,01 | 160,23 | 179,96 |

Tabelle fortgesetzt

| A: Differenz zu Sollwerten | | | | | B: Meßwerte | | |
|---|---|---|---|---|---|---|---|
| $p_1$ [bar] | Soll: 0 [$\mu$m] | Soll: 0 [$\mu$m] | Soll: 0 [$\mu$m] | | Soll: $X_1$ [$\mu$m] | Soll: $X_0$ [$\mu$m] | Soll: $X_2$ [$\mu$m] |
| 2,9 | 0,06 | 0,03 | 0,08 | | 140,06 | 160,33 | 180,08 |
| 3 | 0,00 | 0,03 | 0,00 | | 140,00 | 160,33 | 180,00 |
| 3,1 | -0,06 | -0,01 | -0,02 | | 139,94 | 160,29 | 179,98 |
| 3,2 | -0,15 | -0,06 | -0,22 | | 139,85 | 160,24 | 179,78 |
| 3,3 | -0,01 | -0,05 | -0,35 | | 139,99 | 160,25 | 179,65 |
| A: Differenz von den Sollwerten x | | | | | | | |
| B: Ermittelte Werte nach der Gleichung (24) | | | | | | | |

Das Ergebnis i stimmt mit den Ergebnissen von der Tabelle 8 überein.

Kurzfassung

Manuskript:

1. Neues Druckmeßverfahren, das die Stabilität des Differenzdruckmeßverfahrens besitzt.

Abschnitt:

1. Versorgungsdruckkompensation der klassischen pneumatischen Brükke (Differenzdruckmeßverfahren):

$$x_e = x(1 + \gamma P_0 - \gamma p_1) + X_0 \gamma p_1 - P_0 X_0 \gamma \qquad \ldots(21)$$

Die obere Formel kann allgemein für die Kompensation einer Sensorbrückenschaltung benutzt werden.
2. Versorgungsdruckkompensation des verbesserten Druckmeßverfahrens, das im Manuskript beschrieben wurde:

Variante 1:

Eingangsparameter sind kalibrierte Meßdrücke $p_1$ und $p_2$:

$$x_e \left( X_1 + (\alpha p_1 - p_2 - F_1) \frac{X_2 - X_1}{F_2 - F_1} \right)(1 + \gamma P_0 - \gamma p_1) + X_0 \gamma p_1 - P_0 X_0 \gamma \qquad \ldots(22)$$

Variante 2:

Eingangsparameter sind unkalibrierte Ausgänge (Strom oder Spannung) der Drucksensoren:

$$x_e = X_1 + (v\alpha - u - \gamma(v - V_0)(v\alpha - u - V_0\alpha - U_0) - F_1) \frac{X_2 - X_1}{F_2 - F_1} \qquad \ldots(30)$$

in allgemeiner Form:

$$x_e = Av^2 + Bvu + Cv + Du + E \qquad \qquad ...(36)$$

**Patentansprüche**

**1.** Verfahren zur pneumatischen Längenmessung, bei welchem das zum Messen verwendete Medium durch eine Vordüse (4) und eine Meßdüse (5) auf eine Prallplatte (8) geleitet und aus der Änderung des Druckes $p_2$ zwischen der Vordüse (4) und der Meßdüse (5) der Abstand der Prallplatte (8) von der Meßdüse (5) bestimmt wird, wobei zusätzlich der Druck $p_1$ vor der Vordüse (4) gemessen wird und der sich aus der Druckmessung zwischen Vordüse (4) und Meßdüse (5) ergebende Längenwert in Abhängigkeit vom Druck $p_1$ korrigiert wird,
**dadurch gekennzeichnet,**
**daß** als Korrektur anstelle des Druckes $p_2$ folgende Funktion zur Berechnung der Länge verwendet wird:

$$f(p_1, p_2) = \alpha\, p_1 - p_2$$

wobei $\alpha$ eine Konstante ist, die nicht Null ist.

**2.** Verfahren nach Anspruch 1,
**dadurch gekennzeichnet,**
**daß** ein geeigneter Wert für $\alpha$ durch Messung der Drücke $p_1$ und $p_2$ bei jeweils zwei verschiedenen Versorgungsluftdrücken (A und B) und Berechnung von $\alpha$ nach der Formel:

$$\alpha = \frac{P_{2B} - P_{2A}}{P_{1B} - P_{1A}}$$

mit

$P_{1A}$ ...$p_1$ Versorgungsluftdruck A
$P_{1B}$ ...$p_1$ Versorgungsluftdruck B
$P_{2A}$ ...$p_2$ Versorgungsluftdruck A
$P_{2B}$ ...$p_2$ Versorgungsluftdruck B

bestimmt wird.

**3.** Verfahren nach Anspruch 2,
**dadurch gekennzeichnet,**
**daß** die beiden Versorgungsluftdrücke (A und B) zur Bestimmung von $\alpha$ symmetrisch zu einem gewünschten Luftdruck, insbesondere dem Soll-Luftdruck ($P_o$), gewählt werden und die Messung beim Sollabstand ($X_o$) der Meßdüse (5) ausgeführt wird.

**4.** Verfahren zur pneumatischen Längenmessung, bei welchem das zum Messen verwendete Medium durch eine Vordüse (4) und eine Meßdüse (5) auf eine Prallplatte (8) geleitet und aus der Änderung des Druckes $p_2$ zwischen der Vordüse (4) und der Meßdüse (5) der Abstand der Prallplatte (8) von der Meßdüse (5) bestimmt wird, wobei zusätzlich der Druck $p_1$ vor der Vordüse (4) gemessen wird und der sich aus der Druckmessung zwischen Vordüse (4) und Meßdüse (5) ergebende Längenwert in Abhängigkeit vom Druck $p_1$ korrigiert wird,
**dadurch gekennzeichnet,**
**daß** die Korrektur gemäß der Formel

$$\mathbf{x_e = x - \gamma \Delta p \Delta x}$$

durchgeführt wird, wobei $\Delta p = p_1 - P_0$ und $\Delta x = x - X_0$, mit

$P_0$ Sollwert von $p_1$
$X_0$ Wendepunkt von x
$x_e$ korrigierter Längenwert
x aus $p_2$ errechneter Längenwert
$\gamma$ Konstante, die nicht Null ist.

**5.** Verfahren nach Anspruch 4,
**dadurch gekennzeichnet,**
**daß** ein geeigneter Wert für $\gamma$ durch Ermittlung des angezeigten Längenwerts bei jeweils zwei verschiedenen, durch anderweitige Messung eingestellten Abständen und zwei verschiedenen Drücken $p_1$ und Berechnung von $\gamma$ nach der Formel

$$\gamma = \frac{X_{2Ph} - X_{2P0}}{(P_h - P_0)(X_{2Ph} - X_{0P0})}$$

bestimmt wird, mit

$P_h$ ausgewählter Wert von $p_1$
$X_{2Ph}$ angezeigter Längenwert beim Abstand $X_2$ und Druck $P_h$
$X_{2P0}$ angezeigter Längenwert beim Abstand $X_2$ und Druck $P_0$
$X_0P_0$ angezeigter Längenwert beim Abstand $X_0$ und Druck $P_0$.

**6.** Verfahren nach Anspruch 5,
**dadurch gekennzeichnet,**
**daß** $X_0$ als der Sollabstand und $P_0$ als der Solldruck gewählt werden.

**7.** Verfahren nach einem der vorhergehenden Ansprüche,
**dadurch gekennzeichnet,**
**daß** $p_1$ und $p_2$ kalibrierte Druckwerte sind.

**8.** Verfahren nach einem der Ansprüche 1 bis 6,
**dadurch gekennzeichnet,**
**daß** $p_1$ und $p_2$ unkalibrierte Druckwerte, insbesondere Spannungswerte (v, u) der Drucksensoren (6, 7) sind.

**9.** Verfahren nach Anspruch 8,
**dadurch gekennzeichnet,**
**daß** die Berechnung des korrigierten Längenwertes nach der Formel

$$\mathbf{x_e = X_1 + (f_e(v, u) - F_1)\, \frac{X_2 - X_1}{F_2 - F_1}},$$

erfolgt, wobei

$f_e(v, u) = f(v, u) - \gamma \Delta v \Delta f(v, u)$

$f(v, u) = \alpha v - u$

$$\alpha = \frac{u_h - u_l}{v_h - v_l}$$

$\Delta v = v - V_u$

$\Delta f (v, u) = v\alpha - u - Fo$

$F_1 = f_e (v, u)$ beim Abstand $x = X_1$ und

$F_2 = f_e (v, u)$ beim Abstand $x = X_2$

$F_o = V_o\alpha - U_o$ mit

$v_o$ ausgegebene Spannung bei $p_1 = P_o$
$u_o$ Spannungsbetrag vom Meßdrucksensor bei $p_1 = P_o$

mit

$X_1$ ausgewählter Wert von $x$
$X_2$ ausgewählter Wert von $x$
$x_e$ korrigierter Längenwert
$v$ unkalibrierter Wert des Drucksensors vor der Vordüse
$u$ unkalibrierter Wert des Drucksensors zwischen Vor- und Meßdüse.
$v_h$ Wert von $v$ bei $p_1 = P_n$
$v_1$ Wert von $v$ bei $p_1 = P_1$
$u_h$ Wert von $u$ bei $p_1 = P_n$
$u_1$ Wert von $u$ bei $p_1 = P_1$
$P_1$ ausgewählter Versorgungsdruck

**Claims**

1. Method for pneumatic length measurement in which the medium used for the measurement is directed through a pre-nozzle (4) and a measuring nozzle (5) onto an impact plate (8) and the distance of the impact plate (8) from the measurement nozzle (5) is determined from the change of the pressure $p_2$ between the pre-nozzle (4) and the measurement nozzle (5), wherein the pressure $p_1$ in front of the pre-nozzle (4) is additionally measured and the length value resulting from the pressure measurement between the pre-nozzle (4) and the measurement nozzle (5) is corrected in dependence on the pressure $p_1$,
**characterized in that**,
as a correction, the following function is used for the calculation of the length in place of the pressure $p_2$:

$$f(p_1, p_2) = \alpha\, p_1 - p_2,$$

wherein $\alpha$ is a constant other than zero.

2. Method in accordance with claim 1, **characterized in that** a suitable value for $\alpha$ is determined by measurement of the pressures $p_1$ and $p_2$ for in each case two different supply pressures (A and B) and calculation of $\alpha$ in accordance with the formula:

$$\alpha = \frac{P_{2B} - P_{2A}}{P_{1B} - P_{1A}}$$

with

$P_{1A}$ ... $p_1$ being the air supply pressure A

$P_{1B}$ ... $p_1$ being the air supply pressure B
$P_{2A}$ ... $p_2$ being the air supply pressure A
$P_{2B}$ ... $p_2$ being the air supply pressure B.

**3.** Method in accordance with claim 2, **characterized in that** the two air supply pressures (A and B) for the determination of $\alpha$ are selected symmetrically to a desired air pressure, in particular the intended air pressure ($P_o$), and the measurement is carried out at the desired spacing ($X_o$) of the measurement nozzle (5).

**4.** Method for pneumatic length measurement in which the medium used for the measurement is directed through a pre-nozzle (4) and a measuring nozzle (5) onto an impact plate (8) and the distance of the impact plate (8) from the measurement nozzle (5) is determined from the change of the pressure $p_2$ between the pre-nozzle (4) and the measurement nozzle (5), wherein the pressure $p_1$ in front of the pre-nozzle (4) is additionally measured and the length value resulting from the pressure measurement between the pre-nozzle (4) and the measurement nozzle (5) is corrected in dependence on the pressure $p_1$,
**characterized in that**,
the correction is carried out in accordance with the formula

$$x_e = x - \gamma \Delta p \Delta x$$

where $\Delta p = p_1 - P_0$ and $\Delta x = x - X_0$, with

$P_0$ being the desired value of $p_1$
$X_0$ being the point of inflection of x
$x_e$ being the corrected length value
x being the length value calculated from $p_2$ and
$\gamma$ being a constant other than zero.

**5.** Method in accordance with claim 4, **characterized in that** a suitable value for $\gamma$ is determined by finding the indicated length value at in each case two different spacings set by other measurement and two different pressures $p_1$ and calculation of $\gamma$ in accordance with the formula

$$\gamma = \frac{X_{2Ph} - X_{2P0}}{(P_h - P_0)(X_{2Ph} - X_{0P0})}$$

where

$P_h$ is the selected value of $p_1$
$X_{2Ph}$ is the indicated length value at the distance $X_2$ and the pressure $P_h$
$X_{2P0}$ is the indicated length value at the distance $X_2$ and pressure $P_0$
$X_0P_0$ is the indicated length value at the distance $X_0$ and pressure $P_0$.

**6.** Method in accordance with claim 5, **characterized in that** $X_0$ is selected as the desired spacing and $P_0$ as the desired pressure.

**7.** Method in accordance with any one of the preceding claims, **characterized in that** $p_1$ and $p_2$ are calibrated pressure values.

**8.** Method in accordance with any one of the claims 1 to 6, **characterized in that** $p_1$ and $p_2$ are uncalibrated pressure values, in particular voltage values (v, u) of the pressure sensors (6, 7).

**9.** Method in accordance with claim 8, **characterized in that** the calculation of the corrected length value takes place in accordance with the formula

$$x_e = X_1 + (f_e(v, u) - F_1)\, \frac{X_2 - X_1}{F_2 - F_1},$$

wherein

$f_e(v, u) = f(v, u) - \gamma \Delta v \Delta f(v, u)$

$f(v, u)) \propto v - u$

$$\alpha = \frac{u_h - u_1}{v_h - v_1}$$

$\Delta v = v - V_u$

$\Delta f(v, u) = v\alpha - u - F_0$

$F_1 = f_e(v, u)$ at the distance $x = X_1$ and

$F_2 = f_e(v, u)$ at the distance $x = X_2$

$F_0 = V_{0\alpha} - U_0$

with

$V_0$ being output voltage at $p_1 = P_0$
$U_0$ being voltage amount of measurement pressure sensor at $p_1 = P_0$

with

$X_1$ being a selected value of x
$X_2$ being a selected value of x
$x_e$ being a corrected length value
v being an uncalibrated value of the pressure sensor before the pre-nozzle
u being an uncalibrated value of the pressure sensor between the pre-nozzle and the measurement nozzle
$v_h$ being a value of v at $p_1 = P_h$
$v_1$ being a value of v at $p_1 = P_1$
$u_h$ being a value of u at $p_1 = P_h$
$u_1$ being a value of u at $p_1 = P_1$
$P_1$ being a selected supply pressure

**Revendications**

1. Procédé de mesure pneumatique de longueur, dans lequel le fluide utilisé pour mesurer est introduit à travers une tuyère préliminaire (4) et une tuyère de mesure (5) sur une plaque d'incidence (8) et la distance entre la plaque d'incidence (8) et la tuyère de mesure (5) est déterminée à partir de la variation de la pression $p_2$ entre la tuyère préliminaire (4) et la tuyère de mesure (5), dans lequel la pression $p_1$ est additionnellement mesurée en amont de la tuyère préliminaire (4) et la valeur de longueur résultant de la mesure de pression entre la tuyère préliminaire (4) et la tuyère de mesure (5) est corrigée en fonction de la pression $p_1$,
   **caractérisé en ce que**
   pour calculer la longueur, on utilise à titre de correction à la place de la pression $p_2$ la fonction suivante :

$$f(p_1, p_2) = \alpha\, p_1 - p_2,$$

   dans laquelle $\alpha$ est une constante qui n'est pas zéro.

2. Procédé selon la revendication 1,

**caractérisé en ce que**
l'on détermine une valeur appropriée pour α en mesurant les pressions p₁ et p₂ avec deux pressions d'air d'alimentation (A et B) respectives différentes et en calculant α selon la formule

$$\alpha = \frac{P_{2B} - P_{2A}}{P_{1B} - P_{1A}},$$

dans laquelle

$P_{1A}$....$p_1$ pression d'air d'alimentation A
$P_{1B}$....$p_1$ pression d'air d'alimentation B
$P_{2A}$....$p2$ pression d'air d'alimentation A
$P_{2B}$....$p_2$ pression d'air d'alimentation B

3. Procédé selon la revendication 2,
   **caractérisé en ce que**
   l'on choisit les deux pressions d'air d'alimentation (A et B) pour déterminer α symétriquement à une pression d'air désirée, en particulier la pression d'air de consigne ($P_o$) et l'on effectue la mesure au niveau de la distance de consigne ($X_0$) de la tuyère de mesure (5).

4. Procédé de mesure pneumatique de longueur, dans lequel le fluide utilisé pour mesurer est introduit à travers une tuyère préliminaire (4) et une tuyère de mesure (5) sur une plaque d'incidence (8) et la distance entre la plaque d'incidence (8) et la tuyère de mesure (5) est déterminée à partir de la variation de la pression p₂ entre la tuyère préliminaire (4) et la tuyère de mesure (5), dans lequel la pression p₁ est additionnellement mesurée en amont de la tuyère préliminaire (4) et la valeur de longueur résultant de la mesure de pression entre la tuyère préliminaire (4) et la tuyère de mesure (5) est corrigée en fonction de la pression p₁,
   **caractérisé en ce que**
   l'on effectue la correction selon la formule

$$x_e = x - \gamma \Delta p \Delta x,$$

dans laquelle $\Delta p = p_1 - P_0$ et $\Delta x = x - X_0$, où

$P_0$ valeur consigne de $p_1$
$X_0$ point de rebroussement de x
$x_e$ valeur de longueur corrigée
$x$ valeur de longueur calculée à partir de $p_2$
$\gamma$ constante qui n'est pas zéro.

5. Procédé selon la revendication 4,
   **caractérisé en ce que**
   l'on détermine une valeur appropriée pour γ en déterminant une valeur de longueur indiquée avec des distances respectives différentes et réglées par une autre mesure ainsi que deux différentes pressions p1, et en calculant γ selon la formule

$$\gamma = \frac{X_{2Ph} - X_{2P0}}{(P_h - P_o)(X_{2Ph} - X_{0P0})},$$

$P_h$ valeur choisie de p1
$X_{2Ph}$ valeur de longueur indiquée avec distance $X_2$ et pression $P_h$
$X_{2P0}$ valeur de longueur indiquée avec distance $X_2$ et pression $P_0$
$X_{0P0}$ valeur de longueur indiquée avec distance $X_0$ et pression $P_h$.

**6.** Procédé selon la revendication 5
**caractérisé en ce que**
l'on choisit $X_0$ en tant que distance de consigne et $P_0$ en tant que pression de consigne.

**7.** Procédé selon l'une des revendications précédentes,
**caractérisé en ce que**
$p_1$ et $p_2$ sont des valeurs de pression calibrées.

**8.** Procédé selon l'une des revendications 1 à 6,
**caractérisé en ce que**
$p_1$ et $p_2$ sont des valeurs de pression non calibrées, en particulier des valeurs de tension (v, u) des capteurs de pression (6, 7).

**9.** Procédé selon la revendication 8,
**caractérisé en ce que**
le calcul de la valeur de longueur corrigée a lieu selon la formule

$$x_e = X_1 + (f_e(v,u) - F_1)\frac{X_2 - X_1}{F_2 - F_1},$$

dans laquelle

$f_e(v,u) = f(v,u) - \gamma \Delta vf(v,u)$

$f(v,u) = \alpha v - u$

$$\alpha = \frac{u_h - u_1}{v_h - v_1}$$

$\Delta v = v - V_u$

$\Delta f(v,u) = v\alpha - u - F_0$

$F_1 = f_e(v,u)$ pour la distance x ) $X_1$ et

$F_2 = f_e(v,u)$ pour la distance x ) $X_2$

$F_0 = V_0\alpha - U_0$

avec

$V_0$ tension fournie lorsque $p_1 = P_0$
$U_0$ valeur de tension du capteur de pression de mesure lorsque $p_1 = P_0$

dans laquelle

$X_1$ valeur choisie de x
$X_2$ valeur choisie de x
$x_e$ valeur de longueur corrigée
v valeur non calibrée du capteur de pression en amont de la tuyère préliminaire
u valeur non calibrée du capteur de pression entre la tuyère préliminaire et la tuyère de mesure
$V_h$ valeur de v lorsque $p_1 = P_n$
$V_1$ valeur de v lorsque $p_1 = P_1$
$U_h$ valeur de u lorsque $p_1 = P_n$
$U_1$ valeur de u lorsque $p_1 = P_1$
$P_1$ pression d'alimentation choisie

Fig. 1

Fig. 2

Fig. 3 a)

$A_1$  p2  $A_2$

p1 = konst.  T  X  8

$D_1$  $D_2$

$T_1$  $T_2$

Fig. 3 b)

$\frac{p2}{p1}$

1

0  x [μm]

Fig. 4

$R_{p1}$

$P_1$  $R_{p2}$  $P_2$

Fig. 5

Fig. 6

Fig. 7

Fig. 8

**Fig. 9**

$v = m\,p_1 + n$

$u = k\,p_2 + b$

7

6

4

5

$D_1$

$D_2$

$X_1$  $X_0$  $X_2$

$X$

8

**Fig. 10**

$p_1(p)$

$P_{1B}$

$P_{1A}$

$p_2(p)$

$P_{2B}$

$P_{2A}$

$P_A$

$P_B$

$p$

**Fig. 11**

$p_1$

$P_{1B}$

$P_{1A}$

$p_1$

$P_{2B}$

$p_2$

$P_{2A}$

$P_{1A}$

$P_{1B}$

$p_1$

Fig. 12

Fig. 13

Fig. 14

Fig. 15

EP 0 934 504 B1

Fig. 16

$f(v,u)=f(V_0,U_0)$

Legend: p1=2,7; p1=2,8; p1=2,9; p1=3; p1=3,1; p1=3,2; p1=3,3

Axes: $f(v,u)$ vs $f(V0,u)$

Fig. 17

Legend: p1=2,7; p1=2,8; p1=2,9; p1=3; p1=3,1; p1=3,2; p1=3,3

Axes: $f(v,u)-f(V0,u)$ vs $f(V0,u)$

34

Fig. 18

Fig. 19